# FASCICULE DE BREVET EUROPEEN

(11) **EP 1 537 718 B1**
(45) Date de publication et mention de la délivrance du brevet: **28.06.2006**
(21) Numéro de dépôt: 04785990.5
(22) Date de dépôt: 22.07.2004
(51) Int. Cl.: H04L 29/06

(54) **SERVEUR DE SELECTION AUTOMATIQUE D'AUTHENTIFICATION**
AUTOMATISCHER AUTHENTIFIKATIONSAUSWAHLSERVER
AUTOMATIC AUTHENTICATION SELECTION SERVER

(30) Priorité: 05.08.2003 FR 0309673
(43) Date de publication de la demande: 08.06.2005
(73) Titulaire: FRANCE TELECOM, 75015 Paris (FR)
(72) Inventeur: BAUBAN, Patrick, F-14000 Caen (FR); MICHON, Philippe, F-14760 Bretteville-sur-Odon (FR)
(74) Mandataire: Cabinet Martinet & Lapoux
(86) Numéro de dépôt international: PCT/FR2004/001941
(87) Numéro de publication internationale: WO 2005/015877

(56) Documents cités:
- EP-A- 1 158 745
- EP-A- 1 288 765
- EP-A- 1 301 006

## Description

La présente invention concerne un serveur pour authentifier un usager d'un terminal pour accéder à un service délivré par un prestataire via un mandataire en sélectionnant dynamiquement une procédure d'authentification à travers un réseau de télécommunications. Plus précisément, la procédure d'authentification correspond à une authentification sélectionnée en fonction au moins du prestataire, du terminal, du réseau et d'un niveau de sécurité d'authentification.

Les nombreux systèmes d'authentification existants se différencient par des niveaux de sécurité et des procédures d'authentification. Une authentification classique par identificateur (login) et mot de passe est statique, c'est-à-dire l'identificateur et le mot de passe transmis à travers le réseau sont identiques lors d'authentifications successives. Cette authentification peut subir des piratages de mot de passe et offre ainsi un niveau de sécurité d'authentification faible.

Une authentification par "nombre aléatoire (challenge)/réponse" est dynamique. Elle repose sur un principe de mot de passe à usage unique appelé OTP (One-Time Password). La capture d'un mot de passe est alors inutile puisque le mot de passe n'est pas réutilisable. Lorsqu'un usager désire être authentifié auprès d'un serveur, le serveur génère un nombre aléatoire appelé "challenge", et le transmet au terminal de l'usager. L'usager saisit le mot de passe et l'applique par des algorithmes de chiffrement et de hachage. Le terminal de l'usager transmet l'OTP au serveur qui dispose alors des informations nécessaires à l'authentification de l'usager.

Des authentifications à base de certificats sont également dynamiques. Elles implémentent des algorithmes de cryptographie à clés publiques et asymétriques. Un certificat comprend une identité d'usager, une clé publique et une clé privée qui sont certifiées par une autorité de certification. La clé privée est gardée secrète par l'usager et mémorisée dans le terminal de l'usager. Un mot de passe saisi ou prononcé ; une empreinte biométrique ou un code confidentiel peut être nécessaire pour activer la clé privée. En pratique après l'activation de la clé privée, un serveur transmet un challenge au terminal d'usager. Le terminal d'usager signe le challenge avec la clé privée de l'usager correspondant et le transmet au serveur. Le serveur authentifie alors l'usager avec la clé publique de l'usager. Par exemple, une authentification par signature électronique est à base de certificats.

Comme les procédures d'authentification sont généralement complexes et contraignantes à mettre en place, un mandataire de prestataires de services peut assurer de manière transparente des procédures d'authentification d'usager pour le compte de ses clients appelés "prestataires". Par exemple, un prestataire proposant un service d'information en temps réel sur internet fait appel à un mandataire afin que celui-ci gère intégralement la procédure d'authentification de l'usager. Les procédures d'authentification du mandataire sont généralement identiques sur un même réseau pour tous les prestataires, clients du mandataire. De plus, un prestataire ne peut pas modifier facilement la procédure d'authentification de son choix en fonction du couple terminal (mobile, PC, télévision, PDA) et réseau de télécommunication (GPRS, internet) utilisé par les usagers.

EP1158745 décrit un système serveur-client pour contrôler l'accès d'un terminal d'usager à des fonctions d'application. Le système comprend un serveur incluant un composant d'authentification et un composant de sécurité. Le composant d'authentification fournit plusieurs mécanismes d'authentification qui ne sont décrits en détail. Ces mécanismes d'authentification sont basés notamment sur un mot de passe, un identificateur d'usager et une signature numérique sélectionnés et dépendent d'informations contenues dans la requête du client, telles que le contenu demandé par le client et le type du terminal du client. Le composant de sécurité fournit une police de sécurité décrivant des conditions de sécurité pour accéder à des fonctions d'application. Si l'authentification est valide et les conditions d'accès remplies pour accéder à une fonction d'application, alors le composant de sécurité invoque la fonction d'application.

EP1288765 décrit une seule authentification particulière d'un terminal d'usager auprès d'un fournisseur de service, réalisée par un serveur d'authentification indépendant du fournisseur de service.

EP1301006 a pour objectif d'adapter l'accès à des ressources de réseau en fonction de chaque usager. Des accès à des ressources de réseau sont accordées à un usager en fonction de caractéristiques d'accès comme le type de terminal utilisé par l'usager, la localisation du terminal, les caractéristiques du procédé d'authentification du terminal, le système d'exploitation du terminal, etc.

Aucune des trois documents précitées ne suggère une quelconque sélection d'authentification par un prestataire différent de celui fournissant le contenu.

La présente invention a pour objectif de remédier aux inconvénients précités en sélectionnant automatiquement une authentification en fonction du prestataire et de caractéristiques d'un terminal d'usager et d'un réseau de télécommunications.

Pour atteindre cet objectif, un serveur d'authentification pour sélectionner automatiquement l'une de plusieurs authentifications identifiées respectivement par des identificateurs d'authentification afin d'authentifier un usager d'un terminal pour l'autoriser à accéder à un service dispensé par un serveur de service d'un prestataire identifié par un identificateur de prestataire à travers un réseau de communication, est caractérisé en ce qu'il comprend :
un moyen pour sélectionner dans une mémoire un identificateur d'authentification en fonction de l'identificateur de prestataire et du type du terminal et du type du réseau de communications, et un moyen pour authentifier l'usager selon un processus d'authentification associé à l'identificateur d'authentification.

Le moyen pour sélectionner peut sélectionner également l'identificateur d'authentification en fonction d'un niveau de sécurité d'authentification en correspondance à l'identificateur de prestataire, et/ou en fonction de règles d'authentification associées à l'identificateur de prestataire et appliquées à au moins un niveau de sécurité d'authentification correspondant à l'identificateur de prestataire et/ou au type du terminal et au type du réseau de communication.

Selon une première réalisation, lorsque l'usager désire utiliser un service offert par le serveur de service, une connexion est établie entre le terminal d'usager et le serveur de service qui demande l'authentification de l'usager au moyen pour sélectionner. Dans cette première réalisation, le serveur de service comprend un moyen pour transmettre au moins l'identificateur de prestataire et le type du terminal et le type du réseau de communication au moyen pour sélectionner en réponse à une connexion établie entre le terminal d'usager et le serveur de service, en réponse à la connexion établie précitée.

Selon une deuxième réalisation, une connexion est établie entre le terminal d'usager et le moyen pour sélectionner lorsque l'usager souhaite utiliser un service dans le serveur de service. Dans cette dernière réalisation, le moyen pour sélectionner transmet au terminal une liste de services identifiés par des identificateurs de service en réponse à la connexion établie précitée, et le terminal transmet au moyen pour sélectionner un identificateur de service d'un service sélectionné par l'usager dans la liste transmise, afin que le moyen pour sélectionner sélectionne l'identificateur d'authentification en fonction également de l'identificateur de service sélectionné. Selon une variante de la deuxième réalisation qui peut être combinée à celle-ci, le moyen pour sélectionner transmet au terminal une liste d'identificateurs de prestataire en réponse à une connexion établie entre le terminal d'usager et le moyen pour sélectionner, et le terminal transmet au moyen pour sélectionner un identificateur de prestataire sélectionné par l'usager dans la liste transmise, afin que le moyen pour sélectionner sélectionne l'identificateur d'authentification en fonction notamment de l'identificateur de prestataire sélectionné.

L'invention concerne également un procédé pour sélectionner automatiquement l'une de plusieurs authentifications identifiées respectivement par des identificateurs d'authentification afin d'authentifier un usager d'un terminal pour l'autoriser à accéder à un service dispensé par un serveur de service d'un prestataire identifié par un identificateur de prestataire à travers un réseau de communication. Le procédé est caractérisé en ce qu'il comprend les étapes de :
- sélectionner dans une mémoire un identificateur d'authentification en fonction de l'identificateur de prestataire et du type du terminal et du type du réseau de communication, et
- authentifier l'usager selon un processus d'authentification associé à l'identificateur d'authentification.

D'autres caractéristiques et avantages de la présente invention apparaîtront plus clairement à la lecture de la description suivante de plusieurs réalisations préférées de l'invention, à titre d'exemples non limitatifs, en référence à des signes de référence relatifs à :
- un bloc-diagramme schématique, désigné par "figure 1", d'un système de sélection automatique d'authentification selon l'invention ;
- un algorithme schématique, désigné par "figure 2", d'un procédé de sélection d'authentification mis en oeuvre dans le système de sélection automatique d'authentification selon une première réalisation de l'invention ;
- un algorithme schématique, désigné par "figure 3", d'un procédé de sélection d'authentification mis en oeuvre dans le système de sélection automatique d'authentification selon une deuxième réalisation de l'invention.

Dans les réalisations de l'invention, le système de sélection automatique d'authentification offre des échanges d'informations entre un mandataire, un prestataire de service et un usager.

Le système de sélection automatique d'authentification selon l'invention est basé sur une architecture du type client-serveur. Il comprend principalement, dans la figure 1, plusieurs terminaux d'usager interactifs T, au moins un serveur d'authentification SA en tant que "mandataire" et au moins un serveur de service SE en tant que "prestataire".

Un usager accède à travers son terminal interactif à des services nécessitant une authentification de l'usager. Selon la réalisation la figure 1, un terminal d'usager T₁ est par exemple du type récepteur de télévision intelligent. Le récepteur de télévision T₁ coopère avec une télécommande à afficheur et clavier alphanumérique servant également de souris à travers une liaison infrarouge. En variante, la télécommande est complétée par un clavier plus complet sans fil relié par liaison radioélectrique de proximité au téléviseur.
D'autres terminaux domestiques portables ou non sont envisageables tels que micro-ordinateur, téléphone, console de jeux vidéo, poste de radio, centrale d'alarme, etc. Le terminal T est desservi par une liaison de télécommunications LT et un réseau d'accès RA, tels qu'une ligne téléphonique et le réseau téléphonique commuté, pour être connecté à un réseau de transmission de paquets à haut débit RP du type internet auquel est relié le serveur d'authentification SA.
Selon un autre exemple, le terminal d'usager T₂ de préférence doté au moins d'un haut-parleur est un ordinateur personnel relié directement par modem à la liaison LT. Selon d'autres exemples, le terminal d'usager T₃ comprend un dispositif ou objet électronique de télécommunications personnel à l'usager qui peut être un assistant numérique personnel PDA, ou bien comprend un poste radio intelligent à la place du récepteur de télévision T₁, les deux types de récepteur pouvant coexister.
La liaison de télécommunications LT peut être une ligne xDSL (Digital Subscriber Line) ou une ligne RNIS (Réseau Numérique à Intégration de Services) reliée au réseau d'accès correspondant.
Selon encore un autre exemple, le terminal T₄ est un terminal radiotéléphonique cellulaire mobile, la liaison de télécommunications LT est un canal radiotéléphonique, et le réseau d'accès RA est le réseau fixe d'un réseau de radiotéléphonie, par exemple de type GSM (Global System for Mobile communications) ou UMTS (Universal Mobile Telecommunications System).

Les terminaux d'usager et les réseaux d'accès ne sont pas limités aux exemples ci-dessus de la figure 1 et peuvent être constitués par d'autres terminaux et réseaux d'accès connus.

Le serveur d'authentification SA comprend un module de sélection d'authentification MSA, un module d'authentification MA et au moins une mémoire à six tables de correspondance TA1 à TA6. Le serveur d'authentification est associé à un mandataire.

Dans une variante, le serveur d'authentification SA comprend deux serveurs distincts incluant respectivement le module de sélection d'authentification MSA et le module d'authentification MA. Par exemple, le module MA est dans un serveur HTTP quelconque relié au réseau de télécommunication RC et donc au réseau de paquets RP, et ainsi communique avec le serveur SA incluant le module MSA.

La première table TA1 fait correspondre un identificateur d'authentification AUID à un identificateur de processus d'authentification PAID. Une authentification désigne en général un ensemble de paramètres, tels que login, mot de passe et des caractéristiques d'usager et un ensemble de processus d'authentification utilisant cet ensemble de paramètres. Un processus d'authentification définit des étapes successives d'une authentification identifiée par l'identificateur d'authentification AUID.

La deuxième table TA2 fait correspondre l'identificateur d'authentification AUID de chaque authentification à au moins un type du terminal T et un type d'un réseau de communication RC pouvant supporter l'authentification identifiée. En effet, les authentifications diffèrent selon le type du terminal T et le type du réseau de communication RC à travers lequel transitent les messages échangés entre le terminal et le serveur SE ou SA selon une première ou deuxième réalisation de procédé décrite plus loin.

Le réseau de communication RC est défini par un ensemble de lignes et d'appareils nécessaires à une transmission spécifique de données. Par exemple un réseau SMS (Short Message Service) est un réseau de communication assimilé à une partie du réseau GSM réutilisée dans le transfert de messages courts et d'appareils spécifiques tel qu'un serveur de messages courts. Un réseau vocal constitué d'une plateforme vocale VXML (Voice extensible Markup Language), de serveurs applicatifs et d'une partie du réseau radiotéléphonique ou téléphonique commuté est un autre réseau de communication. Selon d'autres exemples, un réseau de communication selon l'invention peut être au moins l'un des réseaux GSM, UMTS, WAP (Wireless Application Protocol), USSD (Unstructured Supplementary Services Data), Internet, etc.

La troisième table TA3 associe au moins un identificateur de service SID à au moins un identificateur de prestataire de service PRID, c'est-à-dire un identificateur PRID d'un serveur de service SE dispensant un service identifié par l'identificateur SID. Un service peut être associé à un ou plusieurs prestataires et réciproquement un prestataire peut être associé à un ou plusieurs services. A des fins de simplification, le mot "prestataire" peut désigner également au moins un service géré par le prestataire, voire au moins un serveur de service géré par le prestataire.

La quatrième table TA4 fait correspondre à chaque identificateur de prestataire PRID aucune ou au moins une règle d'authentification RE et au moins un niveau de sécurité d'authentification NAU autorisé par le prestataire identifié par l'identificateur de prestataire, ou au moins un identificateur d'authentification AUID. Les règles d'authentification définissent par exemple une action à exécuter lorsque plusieurs niveaux de sécurité d'authentification sont autorisés par un prestataire et/ou lorsque les types du terminal T et du réseau de communication RC identifiés supportent plusieurs authentifications ayant un niveau de sécurité d'authentification autorisé.

La cinquième table TA5 associe à chaque niveau de sécurité d'authentification NAU au moins un identificateur d'authentification AUID.

La sixième table TA6 contient des identificateurs d'usager USID dont les usagers ont chacun un accès à au moins un couple identificateur de prestataire et identificateur de service (PRID, SID) qui est interdit, et éventuellement fait correspondre l'identificateur USID d'un usager à des informations respectives IMP susceptibles de renseigner sur des causes d'interdiction de service relatives à l'usager. Par exemple, les informations IMP renseignent sur des défauts de paiement par l'usager. La table TA6 en liaison avec la table TA3 fait correspondre à chaque identificateur d'usager USID au moins un couple identificateur de prestataire PRID et identificateur de service SID.

Le module d'authentification MA comprend une mémoire de type PROM qui inclut plusieurs processus (algorithmes) d'authentification désignés par des identificateurs PAID, et une base de données d'usagers comprenant au moins deux tables de mémoire TAA1 et TAA2. La table TAA1 associe l'identificateur USID de chaque usager à des informations personnelles sur l'usager, tels qu'un nom, un prénom, un mot de passe, un login, etc., la table TAA2 associe l'identificateur USID d'un usager à au moins un couple identificateur de prestataire PRID et identificateur de service SID.

De préférence, le système de sélection automatique d'authentification selon l'invention comprend plusieurs serveurs de service SE₁ à SE_{I} dans la figure 1. Un serveur de service est de type serveur HTTP classique et dispose d'au moins une application dispensant au moins un service auprès de plusieurs usagers à travers les terminaux T. Au moins un serveur de service SE est associé à un prestataire de service proposant au moins un service aux usagers. La nature des services importe peu pour l'invention. A titre d'exemple, un service est une consultation de compte bancaire ou la réception d'actualités boursières. Un outil de programmation tel qu'une interface de programmation d'application API (Application Programming Interface) est installé sur chaque serveur de service SE. Cet outil API assure des échanges de données formatées entre l'une des applications de service implémentées dans l'un des serveurs de service SE et le serveur d'authentification SA.

Un procédé de sélection d'authentification comprend principalement des étapes E1 à E13 selon une première réalisation dans la figure 2. Un terminal d'usager T requiert une connexion avec l'un des serveurs de service SE à l'étape E1, en lui transmettant une demande d'accès de service.

En réponse à la connexion établie entre le terminal d'usager et le serveur de service SE, l'outil de programmation API installé dans le serveur de service SE établit une connexion avec le serveur d'authentification SA pour transmettre au module de sélection d'authentification MSA l'identificateur de prestataire PRID, le type du terminal T et le type du réseau de communication RC, et des identificateurs de service SID lorsque plusieurs services sont proposés par le prestataire gérant le serveur SE, à l'étape E2. Le serveur de service SE redirige la connexion avec le terminal d'usager T vers le serveur d'authentification SA en transmettant l'adresse URL (Uniform Ressource Locator) du serveur SE au terminal T. Le terminal d'usager T est alors redirigé vers le serveur d'authentification SA.

Le module de sélection d'authentification MSA sélectionne dans une mémoire (TA1 à TA6) un identificateur d'authentification AUID en fonction en outre de l'identificateur de prestataire PRID et du type du terminal T et du type de réseau de communication RC transmis, afin que le module d'authentification MA lance ultérieurement un processus d'authentification associé à l'identificateur d'authentification sélectionné AUID dans le terminal d'usager T.

A l'étape E3, le module de sélection d'authentification MSA dans le serveur d'authentification SA sélectionne dans la table TA4 au moins un niveau de sécurité d'authentification NAU correspondant à l'identificateur du prestataire transmis PRID. Le niveau de sécurité d'authentification contribue également à la sélection de l'identificateur d'authentification AUID. En variante, lorsque plusieurs niveaux de sécurité d'authentification sont déterminés à l'étape E3, les règles d'authentification RE associées à l'identificateur de prestataire PRID dans la table TA4 permettent de sélectionner un seul niveau d'authentification NAU et ainsi participent à la sélection de l'identificateur d'authentification AUID. Par exemple, une règle d'authentification est : "sélectionner en permanence le niveau de sécurité d'authentification le plus élevé".

Puis à l'étape E4, le module de sélection MSA sélectionne dans la table TA5 au moins un identificateur d'authentification AUID1 correspondant au ou aux niveaux de sécurité d'authentification NAU sélectionnés à l'étape E3.

A l'étape E5, le module de sélection MSA sélectionne dans la table TA2 au moins un identificateur d'authentification AUID2 correspondant au type du terminal et au type du réseau de communication transmis par le serveur SE. En variante, l'étape E5 se déroule avant ou après l'étape E3.

A l'étape E6, le module de sélection MSA détermine des identificateurs d'authentification AUID3 communs aux identificateurs d'authentification AUID1 et AUID2 sélectionnés aux étapes E4 et E5. Lorsqu'il n'y a aucun identificateur d'authentification commun, un message de rejet signalant un rejet de l'accès au service demandé par l'usager est envoyé par le serveur d'authentification SA au terminal d'usager T à une étape E71. Lorsque plusieurs identificateurs d'authentification AUID3 sont en commun, les règles d'authentification RE associées à l'identificateur de prestataire PRID permettent de ne sélectionner qu'un seul identificateur d'authentification AUID à une étape E72.

Le module de sélection d'authentification ayant sélectionné l'identificateur de l'authentification AUID, le module d'authentification MA dans le serveur d'authentification SA sélectionne dans la table TA1 un identificateur de processus d'authentification PAID correspondant à l'identificateur d'authentification AUID à l'étape E8. Le module d'authentification MA lance le processus d'authentification identifié par l'identificateur de processus sélectionné PAID à l'étape E9. Le processus d'authentification définit des étapes qui composent l'authentification associée au processus. Par exemple, l'authentification sélectionnée est une authentification classique par login et mot de passe, et l'une des étapes du processus de l'authentification est alors un envoi d'une demande de saisie du login et du mot de passe par le serveur d'authentification SA au terminal d'usager T.

Lorsque l'usager n'est pas authentifié à l'étape E10 le module d'authentification MA du serveur d'authentification SA transmet au terminal un message de rejet à une étape E012.

Un usager authentifié est ainsi un usager dont l'identificateur USID est inclus dans la table de mémoire TAA1 du module d'authentification MA.

Lorsque l'usager est authentifié, le module d'authentification MA vérifie dans la table TAA2 si l'usager a souscrit au couple prestataire/service à une étape E11, c'est-à-dire si l'identificateur d'usager USID est associé au couple identificateur de prestataire sélectionné et identificateur de service sélectionné (PRID, SID) dans la table TAA2. Lorsque l'usager n'a pas souscrit au couple prestataire/service, le module d'authentification MA transmet au terminal un message de rejet à l'étape E012.

Lorsque l'usager est authentifié et a souscrit au couple prestataire/service, le module d'authentification MA vérifie dans la table TA6 si l'usager n'est pas interdit d'accès au couple identificateur de prestataire et identificateur de service (PRID, SID) à l'étape E12. Lorsque l'usager est interdit d'accès, le module d'authentification transmet au terminal un message de rejet à l'étape E012.

Lorsque l'usager n'est pas interdit d'accès, et donc à la suite d'une authentification positive de l'usager, le module d'authentification MA dans le serveur d'authentification SA commande une redirection de la connexion avec le terminal T vers le serveur de service SE. Le module MA dans le serveur SA commande également la transmission du type du terminal, du type du réseau de communication, de l'identificateur de service SID, du niveau de sécurité d'authentification NAU sélectionné ou désigné par l'identificateur d'authentification AUID, et éventuellement de l'identificateur d'usager USID et/ou d'un ticket de facturation et/ou d'un résultat de l'authentification de l'usager qui est ici positif, au serveur de service SE, plus particulièrement à l'outil de programmation API du serveur de service, à l'étape E13. La transmission de l'identificateur de service SID est utile lorsque le serveur de service SE dispense plusieurs services.

En pratique, le module d'authentification MA mémorise le résultat de l'authentification de l'usager afin de conserver une trace de l'authentification lors d'un litige entre l'usager du terminal T et le prestataire gérant le serveur de service SE.

En variante, au moins l'une des étapes E11 et E12 précède les étapes d'authentification E8, E9 et E10.

Dans une variante principale de la première réalisation, le module de sélection d'authentification MSA dans le serveur d'authentification SA sélectionne à l'étape E3 dans la table TA4 tous les identificateurs d'authentification AUID associés à l'identificateur de prestataire PRID transmis par le serveur de service SE au lieu de sélectionner un niveau de sécurité d'authentification NAU. Dans cette variante, l'étape E4 est supprimée. A l'étape E5, le module de sélection MSA sélectionne dans la table TA2 au moins un identificateur d'authentification AUID2 correspondant au type du terminal T et du réseau de communication RC transmis par le serveur SE. A l'étape E6, le module de sélection détermine des identificateurs d'authentification communs à ceux résultants des sélections réalisées aux étapes E3 et E5. Lorsqu'aucun identificateur d'authentification commun n'est déterminé par le module de sélection, un message de rejet est envoyé du serveur d'authentification SA au terminal d'usager T à l'étape E71. Lorsque plusieurs identificateurs d'authentification sont en commun, les règles d'authentification RE associées à l'identificateur de prestataire PRID permettent de ne sélectionner qu'un seul identificateur d'authentification AUID à l'étape E72. Les étapes suivantes sont identiques à celles de la première réalisation.

Un paramètre peut être renseigné au niveau de l'outil de programmation API par le prestataire, afin de choisir entre un mode par niveau de sécurité d'authentification correspondant à la première réalisation et un mode par authentification correspondant à la variante énoncée ci-dessus. Ce paramètre est transmis par l'outil API au serveur d'authentification SA à l'étape E2. Ce paramètre peut être associé préalablement à l'identificateur de prestataire PRID dans la table TA4.

Dans une deuxième réalisation, le procédé de sélection d'authentification comprend principalement des étapes F1 à F16 dans la figure 3. Le terminal requiert une connexion directe avec le module de sélection d'authentification MSA dans le serveur d'authentification SA à l'étape F1.

En réponse à la connexion établie entre le terminal d'usager T et le module de sélection MSA, le serveur d'authentification SA ou plus précisément le module de sélection d'authentification MSA transmet au terminal T une liste de services {SID} différents contenus dans la table TA3 à l'étape F2. La liste de services {SID} comporte au moins les identificateurs SID des services et en variante d'autres caractéristiques comme un nom et une description de chaque service. L'usager du terminal T sélectionne un service dans la liste de services {SID}. Le terminal T transmet au module de sélection MSA l'identificateur de service SID associé au service sélectionné par l'usager à l'étape F3 dans la liste transmise. Le module de sélection d'authentification sélectionne l'identificateur d'authentification AUID en fonction également de l'identificateur de service sélectionné SID.

A l'étape F4 le serveur d'authentification SA sélectionne dans la table TA3 tous les identificateurs de prestataire correspondant à l'identificateur de service sélectionné SID, sous la forme d'une liste d'identificateurs de prestataire {PRID}.

Lorsque la liste d'identificateurs de prestataire comprend plusieurs identificateurs de prestataire PRID correspondant à l'identificateur de service sélectionné SID, le serveur d'authentification SA transmet au terminal d'usager T la liste {PRID} des identificateurs de prestataire susceptibles d'offrir le service identifié par l'identificateur de service SID, à une étape F51. Cette liste d'identificateurs de prestataire {PRID} comporte au moins les identificateurs des prestataires et en variante d'autres caractéristiques comme un nom et une description de chaque prestataire. L'usager du terminal sélectionne un prestataire puis le terminal transmet au serveur d'authentification SA l'identificateur PRID du prestataire sélectionné par l'usager à une étape F52.

Lorsqu'aucun identificateur de prestataire ne correspond à l'identificateur de service SID, un message d'erreur est transmis par le serveur d'authentification SA au terminal T à une étape F53, afin de notifier à l'usager du terminal qu'aucun prestataire ne délivre encore ce service.

Dans une variante, le serveur d'authentification SA transmet directement une liste de tous les identificateurs de prestataire contenus dans la table TA4 au terminal T, à la place de la liste des identificateurs de service, à l'étape F2. L'usager sélectionne directement un prestataire, et l'identificateur de prestataire sélectionné PRID, à la place de l'identificateur de service SID sélectionné, est alors transmis par le terminal T au module de sélection d'authentification MSA du serveur d'authentification SA à l'étape F3. Le module de sélection d'authentification MSA sélectionne l'identificateur d'authentification AUID en fonction notamment de l'identificateur de prestataire PRID sélectionné.

Lorsque plusieurs identificateurs de service correspondent à l'identificateur de prestataire PRID sélectionné précédemment, le serveur d'authentification transmet au terminal chaque identificateur de prestataire et la liste d'identificateurs de service associée à l'étape F2. L'usager du terminal sélectionne le prestataire et l'un des services offerts par le prestataire sélectionné, puis le terminal T transmet au serveur d'authentification SA l'identificateur PRID du prestataire et l'identificateur SID du service sélectionnés par l'usager du terminal, à l'étape F3. Dans cette variante, les étapes F4, F51, F52 et F53 sont supprimées.

Le serveur d'authentification SA a alors en mémoire le couple identificateur de prestataire et identificateur de service (SID, PRID) correspondant au souhait de l'usager.

Les étapes suivantes F6 à F15 correspondent respectivement aux étapes E3 à E12 de la première réalisation de procédé de sélection dans la figure 2.

A l'étape F8 correspondant à l'étape E5, le serveur d'authentification SA détermine le type du terminal et le type du réseau de communication RC utilisé pour communiquer entre le terminal T et le serveur d'authentification SA. Puis ce dernier sélectionne au moins un identificateur d'authentification AUID2 en fonction du type du terminal T et du type du réseau de communication RC, comme cela a été décrit pour l'étape E5.

Lorsque l'usager est authentifié, a souscrit au couple prestataire/service, et est autorisé à accéder au couple prestataire/service, le serveur d'authentification SA redirige la connexion avec le terminal T vers le serveur de service SE et transmet à l'étape F16 au serveur de service SE, et plus particulièrement à l'outil API du serveur de service SE, le type du terminal, le type du réseau de communication de l'usager, l'identificateur de service SID, le niveau de sécurité d'authentification NAU sélectionné, et éventuellement l'identificateur d'usager USID et/ou un ticket de facturation et/ou le résultat de l'authentification qui est positif.

Lorsque le résultat de l'authentification de l'usager est positif et transmis ou plus simplement lorsque le type du terminal, le type du réseau de communication, l'identificateur de service et le niveau de sécurité d'authentification sont transmis, le serveur de service SE autorise le terminal d'usager à accéder au service souhaité par l'usager et identifié par l'identificateur de service SID. Dans d'autres cas, l'accès est refusé à l'usager comme indiqué à l'étape E012.

Le type du terminal T et le type du réseau de communication RC sont transmis afin que le serveur de service SE adapte la communication au terminal. Par exemple, si le terminal est un terminal radiotéléphonique cellulaire mobile et le protocole d'échange avec celui-ci à travers l'internet est de type WAP, le serveur de service SE communiquera avec le terminal en utilisant le langage WML (Wireless Markup Language).

Dans une variante de la deuxième réalisation, après l'étape F1 et avant l'étape F2, l'usager du terminal T sélectionne lui-même un niveau de sécurité d'authentification NAU parmi plusieurs connus préalablement. En réponse à l'identificateur sélectionné NAU transmis par le terminal au serveur d'authentification SA, ce dernier transmet des identificateurs de service SID correspondant au niveau d'authentification sélectionné par l'usager à l'étape F2. L'usager sélectionne le service, puis le terminal transmet l'identificateur de service SID au serveur d'authentification SA, à l'étape F3. Ensuite dans les étapes suivantes F4 à F16, l'étape F6 correspondant à l'étape E3 est supprimée.

En variante lorsque dans les première et deuxième réalisations le serveur d'authentification SA transmet l'identificateur d'usager USID, le serveur d'authentification peut également transmettre d'autres paramètres sur l'usager comme le nom, le prénom, etc.

La variante principale de la première réalisation peut être appliquée dans le contexte de la deuxième réalisation.

L'invention décrite ici concerne un procédé et un serveur de sélection d'authentification. Selon une implémentation préférée, les étapes du procédé sont déterminées par les instructions d'un programme de sélection d'authentification incorporé dans un serveur d'authentification SA, et le procédé selon l'invention est mis en oeuvre lorsque ce programme est chargé dans un ordinateur dont le fonctionnement est alors commandé par l'exécution du programme.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation et être sous la forme de code exécutable ou dans n'importe quelle forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type internet.

Alternativement, le support d'informations peut être un circuit intégré dans lequel le programme est incorporé, le circuit étant adapté pour exécuter ou pour être utilisé dans l'exécution du procédé selon l'invention.

## Revendications

1. Serveur d'authentification pour sélectionner automatiquement l'une de plusieurs authentifications identifiées respectivement par des identificateurs d'authentification (AUID) afin d'authentifier un usager d'un terminal (T) pour l'autoriser à accéder à un service dispensé par un serveur de service (SE) d'un prestataire identifié par un identificateur de prestataire (PRID) à travers un réseau de communication (RC) , **caractérisé en ce qu'**il comprend:
un moyen (MSA) pour sélectionner dans une mémoire (TA1 à TA6) un identificateur d'authentification (AUID) en fonction de l'identificateur de prestataire (PRID) et du type du terminal et du type du réseau de communication, et un moyen (MA) pour authentifier l'usager selon un processus d'authentification associé à l'identificateur d'authentification (AUID).

2. Serveur d'authentification conforme à la revendication 1, dans lequel le moyen pour sélectionner (MSA) sélectionne (E4) l'identificateur d'authentification (AUID) en fonction d'un niveau de sécurité d'authentification (NAU) en correspondance à l'identificateur de prestataire (PRID).

3. Serveur d'authentification conforme à la revendication 1 ou 2, **caractérisé en ce que** le moyen pour sélectionner (MSA) sélectionne l'identificateur d'authentification (AUID) en fonction de règles d'authentification (RE) associées à l'identificateur de prestataire (PRID) et appliquées à au moins un niveau de sécurité d'authentification (NAU) correspondant à l'identificateur de prestataire (PRID) et/ou au type de terminal et au type de réseau de communication.

4. Serveur d'authentification conforme à l'une quelconque des revendications 1 à 3, **caractérise en ce que** le serveur de service (SE) comprend un moyen (API) pour transmettre (E2) au moins l'identificateur de prestataire (PRID) et le type de terminal et le type de réseau de communication au moyen pour sélectionner (MSA) en réponse à une connexion établie entre le terminal d'usager (T) et le serveur de service (SE).

5. Serveur d'authentification conforme à l'une quelconque des revendications 1 à 3, dans lequel le moyen pour sélectionner (MSA) transmet au terminal (F2) une liste de services ({SID}) identifiés par des identificateurs de service (SID) en réponse à une connexion établie entre le terminal d'usager (T) et le moyen pour sélectionner (MSA), et le terminal transmet (F3) au moyen pour sélectionner un identificateur de service (SID) d'un service sélectionné par l'usager dans la liste transmise, afin que le moyen pour sélectionner sélectionne l'identificateur d'authentification (AUID) en fonction également de l'identificateur de service sélectionné (SID).

6. Serveur d'authentification conforme à l'une quelconque des revendications 1 à 5, dans lequel le moyen pour sélectionner (MSA) transmet au terminal (F2) une liste ({PRID}) d'identificateurs de prestataire (PRID) en réponse à une connexion établie entre le terminal d'usager (T) et le moyen pour sélectionner (MSA), et le terminal transmet (F3) au moyen pour sélectionner un identificateur de prestataire (PRID) sélectionné par l'usager dans la liste transmise, afin que le moyen pour sélectionner sélectionne l'identificateur d'authentification (AUID) en fonction notamment de l'identificateur de prestataire (PRID) sélectionné.

7. Serveur d'authentification conforme à l'une quelconque des revendications 1 à 6, dans lequel le moyen pour authentifier (MA) transmet (E13, F16) au serveur de service (SE) au moins le type du terminal, le type du réseau de communication, l'identificateur de service (SID) transmis, et un niveau de sécurité (NAU) de l'authentification désigné par l'identificateur d'authentification sélectionné (AUID), lorsque l'usager est authentifié.

8. Serveur d'authentification conforme à l'une quelconque des revendications 1 à 6, **caractérisé en ce qu'**il comprend deux serveurs distincts incluant respectivement le moyen pour sélectionner (MSA) et le moyen pour authentifier (MA).

9. Procédé pour sélectionner automatiquement l'une de plusieurs authentifications identifiées respectivement par des identificateurs d'authentification (AUID) afin d'authentifier un usager d'un terminal (T) pour l'autoriser à accéder à un service dispensé par un serveur de service (SE) d'un prestataire identifié par un identificateur de prestataire (PRID) à travers un réseau de communication (RC), **caractérisé en ce qu'**il comprend les étapes de :
- sélectionner dans une mémoire (TA1 à TA6) un identificateur d'authentification (AUID) en fonction de l'identificateur de prestataire (PRID) et du type du terminal et du type du réseau de communication, et
- authentifier l'usager selon un processus d'authentification associé à l'identificateur d'authentification (AUID).

10. Programme d'ordinateur sur un support d'informations, chargé et exécuté dans un serveur d'authentification (SA) pour sélectionner automatiquement l'une de plusieurs authentifications identifiées respectivement par des identificateurs d'authentification (AUID) afin d'authentifier un usager d'un terminal (T) pour l'autoriser à accéder à un service dispensé par un serveur de service (SE) d'un prestataire identifié par un identificateur de prestataire (PRID) à travers un réseau de communication (RC), ledit programme étant **caractérisé en ce qu'**il comporte des instructions de programme pour :
- sélectionner (E6) dans une mémoire (TA1 à TA6) un identificateur d'authentification (AUID) en fonction de l'identificateur de prestataire (PRID) et du type du terminal et du type du réseau de communication, et
- authentifier l'usager selon un processus d'authentification associé à l'identificateur d'authentification (AUID).

## Claims

1. An authentication server for automatically selecting one of a plurality of authentications identified respectively by authentication identifiers (AUID) in order to authenticate a user of a terminal (T) in order to authorize the user to access a service dispensed by a service server (SE) of a provider identified by a provider identifier (PRID) via a communication network (RC), **characterized in that** it comprises:
means (MSA) for selecting an authentication identifier (AUID) in a memory (TA1 to TA6) as a function of the provider identifier (PRID) and the type of the terminal and the type of the communication network, and means (MA) for authenticating the user by means of an authentication process associated with the authentication identifier (AUID).

2. An authentication server according to claim 1, wherein the selecting means (MSA) selects (E4) the authentication identifier (AUID) as a function of an authentication security level (NAU) in corresponding relationship to the provider identifier (PRID).

3. An authentication server according to claim 1 or 2, **characterized in that** the selecting means (MSA) selects the authentication identifier (AUID) as a function of authentication rules (RE) associated with the provider identifier (PRID) and applied to at least an authentication security level (NAU) corresponding to the provider identifier (PRID) and/or to the terminal type and to the communication network type.

4. An authentication server according to any one of claims 1 to 3, **characterized in that** the service server (SE) comprises means (API) for transmitting (E2) at least the provider identifier (PRID) and the terminal type and the communication network type to the selecting means (MSA) in response to a connection set up between the user terminal (T) and the service server (SE).

5. An authentication server according to any one of claims 1 to 3, wherein the selecting means (MSA) transmits to the terminal (F2) a list ({SID}) of services identified by service identifiers (SID) in response to a connection set up between the user terminal (T) and the selecting means (MSA), and the terminal transmits (F3) to the selection means a service identifier (SID) of a service selected by the user in the transmitted list in order for the selecting means to select the authentication identifier (AUID) as a function also of the selected service identifier (SID).

6. An authentication server according to any one of claims 1 to 5, wherein the selecting means (MSA) transmits to the terminal (F2) a list ({PRID}) of provider identifiers (PRID) in response to a connection set up between the user terminal (T) and the selecting means (MSA), and the terminal transmits (F3) to the selecting means a provider identifier (PRID) selected by the user in the transmitted list in order for the selecting means to select the authentication identifier (AUID) as a function in particular of the selected provider identifier (PRID).

7. An authentication server according to any one of claims 1 to 6, wherein, if the user has been authenticated, the authenticating means (MSA) transmits (E13, F16) to the service server (SE) the terminal type, the communication network type, the transmitted service identifier (SID), and a security level (NAU) of the authentication designated by the selected authentication identifier (AUID).

8. An authentication server according to any one of claims 1 to 6, **characterized in that** it comprises two separate servers respectively including the selecting means (MSA) and the authenticating means (MA).

9. A method for automatically selecting one of a plurality of authentications identified respectively by authentication identifiers (AUID) in order to authenticate a user of a terminal (T) to authorize the user to access a service dispensed by a service server (SE) of a provider identified by a provider identifier (PRID) via a communication network (RC), **characterized in that** it comprises the steps of :
- selecting an authentication identifier (AUID) in a memory (TA1 to TA6) as a function of the provider identifier (PRID) and the type of the terminal and the type of the communication network, and
- authenticating the user by an authentication process associated with the authentication identifier (AUID).

10. A computer program on an information medium, loaded into and executed in an authentication server (SA) for automatically selecting one of a plurality of authentications respectively identified by authentication identifiers (AUID) in order to authenticate a user of a terminal (T) in order to authorize the user to access a service dispensed by a service server (SE) of a provider identified by a provider identifier (PRID) via a communication network (RC), said program being **characterized in that** it includes program instructions for:
- selecting (E6) an authentication identifier (AUID) in a memory (TA1 to TA6) as a function of the provider identifier (PRID) and the type of the terminal and the type of the communication network, and
- authenticating the user by an authentication process associated with the authentication identifier (AUID).

## Patentansprüche

1. Authentifizierungsserver zur automatischen Auswahl einer von mehreren Authentifizierungen, jeweils wiedergegeben durch Authentifizierungsidentifikatoren (AUID), mit dem Ziel, einen Nutzer eines Endgerätes (T) zu authentifizieren zwecks Autorisierung des Zugangs zu einem Dienst, der von einem Diensteserver (SE) eines durch einen Anbieteridentifikator (PRID) **gekennzeichnet**en Anbieters über ein Kommunikationsnetz (RC) bereitgestellt wird, **dadurch gekennzeichnet, dass** er Folgendes umfasst:
eine Einrichtung (MSA) zur Auswahl aus einem Speicher (TA1 bis TA6) eines Authentifizierungsidentifikators (AUID) in Abhängigkeit vom Anbieteridentifikator (PRID) und dem Typ des Endgerätes und Typ des Kommunikationsnetzes sowie eine Einrichtung (MA) zur Authentifizierung des Nutzers gemäß einem dem Authentifizierungsidentifikator (AUID) zugeordneten Authentifizierungsvorgang.

2. Authentifizierungsserver gemäß Anspruch 1, bei dem die Auswahleinrichtung (MSA) den Authentifizierungsidentifikator (AUID) in Abhängigkeit von einem dem Anbieteridentifikator (PRID) zugehörigen Authentifizierungssicherheitsniveau (NAU) auswählt (E4).

3. Authentifizierungsserver gemäß Anspruch 1 oder 2, **dadurch gekennzeichnet, dass** die Auswahleinrichtung (MSA) den Authentifizierungsidentifikator (AUID) in Abhängigkeit von dem Anbieteridentifikator (PRID) zugeordneten Authentifizierungsregeln (RE) auswählt, die auf mindestens ein dem Anbieteridentifikator (PRID) und/oder dem Endgerätetyp und Kommunikationsnetztyp entsprechendes Authentifizierungssicherheitsniveau (NAU) angewandt werden.

4. Authentifizierungsserver gemäß einem beliebigen der Ansprüche 1 bis 3, **dadurch gekennzeichnet, dass** der Diensteserver (SE) eine Einrichtung (API) zum Übermitteln (E2) mindestens des Anbieteridentifikators (PRID) und des Endgerätetyps und des Kommunikationsnetztyps an die Auswahleinrichtung (MSA) als Antwort auf die zwischen dem Nutzerendgerät (T) und dem Diensteserver (SE) hergestellte Verbindung umfasst.

5. Authentifizierungsserver gemäß einem beliebigen der Ansprüche 1 bis 3, bei dem die Auswahleinrichtung (MSA) eine Liste von durch Dienste-Identifikatoren (SID) **gekennzeichnet**e Diensten ({S1D}) als Antwort auf eine zwischen dem Nutzerendgerät (T) und der Auswahleinrichtung (MSA) hergestellte Verbindung an das Endgerät (F2) übermittelt und das Endgerät (F3) einen Dienste-Identifikator (SID) eines vom Nutzer aus der übermittelten Liste ausgewählten Dienstes an die Auswahleinrichtung übermittelt, damit die Auswahleinrichtung den Authentifizierungsidentifikator (AUID) auch in Abhängigkeit vom gewählten Dienste-Identifikator (SID) auswählt.

6. Authentifizierungsserver gemäß einem beliebigen der Ansprüche 1 bis 5, bei dem die Auswahleinrichtung (MSA) eine Liste ({PRID}) von Anbieteridentifikatoren (PRID) als Antwort auf eine zwischen dem Nutzerendgerät (T) und der Auswahleinrichtung (MSA) hergestellte Verbindung an das Endgerät (F2) übermittelt und das Endgerät (F3) einen vom Nutzer aus der übermittelten Liste ausgewählten Anbieteridentifikator (PRID) an die Auswahleinrichtung übermittelt, damit die Auswahleinrichtung den Authentifizierungsidentifikator (AUID) insbesondere in Abhängigkeit von dem ausgewählten Anbieteridentifikator (PRID) auswählt.

7. Authentifizierungsserver gemäß einem beliebigen der Ansprüche 1 bis 6, bei dem die Authentifizierungseinrichtung (MA) mindestens den Typ des Endgerätes, den Typ des Kommunikationsnetzes, den übermittelten Dienste-Identifikator (SID) und ein durch den ausgewählten Authentifizierungsidentifikator (AUID) bezeichnetes Authentifizierungssicherheitsniveau (NAU) an den Diensteserver (SE) übermittelt (E13, F16), sobald der Nutzer authentifiziert ist.

8. Authentifizierungsserver gemäß einem beliebigen der Ansprüche 1 bis 6, **dadurch gekennzeichnet, dass** er zwei separate Server umfasst, die die Auswahleinrichtung (MSA) bzw. die Authentifizierungseinrichtung (MA) beinhalten.

9. Verfahren zur automatischen Auswahl einer von mehreren Authentifizierungen, jeweils wiedergegeben durch Authentifizierungsidentifikatoren (AUID), mit dem Ziel, einen Nutzer eines Endgerätes (T) zu authentifizieren zwecks Autorisierung des Zugangs zu einem Dienst, der von einem Diensteserver (SE) eines durch einen Anbieteridentifikator (PRID) **gekennzeichnet**en Anbieters über ein Kommunikationsnetz (RC) bereitgestellt wird, **dadurch gekennzeichnet, dass** es folgende Stufen umfasst:
- Auswahl aus einem Speicher (TA1 bis TA6) eines Authentifizierungsidentifikators (AUID) in Abhängigkeit vom Anbieteridentifikator (PRID) und dem Typ des Endgerätes und Typ des Kommunikationsnetzes und
- Authentifizierung des Nutzers gemäß einem dem Authentifizierungsidentifikator (AUID) zugeordneten Authentifizierungsvorgang.

10. Computerprogramm auf einem Informationsträger, geladen und ausgeführt auf einem Authentifizierungsserveur (SA), zur Auswahl einer von mehreren Authentifizierungen, jeweils wiedergegeben durch Authentifizierungsidentifikatoren (AUID), mit dem Ziel, einen Nutzer eines Endgerätes (T) zu authentifizieren zwecks Autorisierung des Zugangs zu einem Dienst, der von einem Diensteserver (SE) eines durch einen Anbieteridentifikator (PRID) **gekennzeichnet**en Anbieters über ein Kommunikationsnetz (RC) bereitgestellt wird, wobei das besagte Programm **dadurch gekennzeichnet ist, dass** es Programmanweisungen enthält zur:
- Auswahl aus einem Speicher (TA1 bis TA6) eines Authentifizierungsidentifikators (AUID) in Abhängigkeit vom Anbieteridentifikator (PRID) und dem Typ des Endgerätes und Typ des Kommunikationsnetzes sowie
- Authentifizierung des Nutzers gemäß einem dem Authentifizierungsidentifikator (AUID) zugeordneten Authentifizierungsvorgang.
